# EUROPEAN PATENT APPLICATION

(11) **EP 4 428 162 A1**
(43) Date of publication of application: **11.09.2024**
(21) Application number: 24162412.1
(22) Date of filing: 08.03.2024
(51) Int. Cl.: C08F 2/26, C08F 2/38, C08F 220/18, C09J 7/38, C09J 133/06, C09J 133/08, C08F 2/30

(54) **EMULSION-BASED PRESSURE-SENSITIVE ADHESIVE COMPOSITIONS AND TAPES OR SHEETS WITH IMPROVED THERMAL STABILITY**

(30) Priority: 10.03.2023 EP 23161185
(71) Applicant: Nitto Belgium NV, 3600 Genk (BE); Nitto Denko Corporation, Ibaraki-shi, Osaka 567-8680 (JP)
(72) Inventor: HAMADA, Hiroyuki, 3600 Genk (BE); VANDENHOLT, Myriam, 3600 Genk (BE); SAK, Iris, 3600 Genk (BE); IWAMOTO, Riki, Osaka (JP); ISHII, Hiroyasu, Osaka (JP)
(74) Representative: Grünecker Patent- und Rechtsanwälte PartG mbB

(57) **Abstract**

A pressure-sensitive adhesive composition which enables a higher stability under high-temperature conditions while retaining and/or improving the humidity resistance is described, which comprises: an acrylic polymer, and a poly((meth) acrylic acid); wherein a content of poly((meth)acrylic acid) is between 2.5 parts by weight to 10 parts by weight relative to 100 parts by weight of solid matter of the acrylic polymer; and wherein the acrylic polymer has been prepared by emulsion polymerization in the presence of a reactive surfactant in the amount of 1.25 parts by weight and less than 2.0 parts by weight relative to 100 parts by total weight of the monomers constituting the acrylic polymer. In further aspects, a pressure-sensitive adhesive sheet or tape comprising a pressure-sensitive adhesive layer formed from the aforementioned pressure-sensitive adhesive composition is described.

## Description

### FIELD OF INVENTION

The present invention relates to an acrylic emulsion-based pressure-sensitive adhesive composition which maintains excellent elasticity under high temperature conditions.

Further aspects of the present invention include pressure-sensitive adhesive sheets comprising the aforementioned adhesive composition.

### BACKGROUND OF THE INVENTION

In the past decades, an increasing number of emulsion-based pressure-sensitive adhesive (PSA) compositions have been developed in view of a growing demand for environmentally sustainable PSA materials and production methods which avoid or at least reduce the use of organic solvents. In this respect, PSA production methods based on emulsion polymerization in aqueous reaction media are preferred as they enable environmentally friendly production without elaborate and/or expensive equipment and with improved safety.

Such adhesive compositions are widely used in masking tapes, double-faced pressure-sensitive adhesive tapes, surface-protective films, packaging tapes, and the like. Especially acrylic pressure-sensitive adhesives of the aqueous dispersion type are increasingly used in place of the existing rubber-based pressure-sensitive adhesives of the aqueous dispersion type because of their excellent adhesive properties and weatherability resistance.

For example, EP 1 340 797 A2 discloses a water-dispersed PSA composition which exhibits a satisfactory initial pressure-sensitive adhesive force even when being applied on dewy or wet surfaces, and which may be removed without leaving adhesive residues upon peeling. Further examples of water-dispersed PSA compositions are disclosed in US 2023/0047269 A1 and US 2023/048315 A1.

EP 3 892 698 A1 further discloses a water-dispersed pressure-sensitive adhesive (PSA) composition with improved water resistance. For this purpose, EP 3 892 698 A1 teaches the use of a water-dispersed PSA composition using an acrylic polymer as base polymer and comprising a water-dispersed tackifier resin, when a polyacrylic acid having a certain number average molecular weight is added in a certain amount relative to the base polymer.

However, while the aforementioned prior art documents are concerned with the provision of emulsion-based adhesives with improved humidity resistance and/or application on wet surfaces, such adhesive compositions often tend to show an undesirable increase in elasticity when being subjected to elevated temperatures.

Therefore, it remains desirable to provide an emulsion-based PSA composition which enables a higher stability under high-temperature conditions while retaining and/or improving the humidity resistance.

### SUMMARY OF THE INVENTION

The present invention solves this object with the subject matter of the claims as defined herein. The advantages of the present invention will be further explained in detail in the section below and further advantages will become apparent to the skilled artisan upon consideration of the invention disclosure.

It has been found that emulsion polymerization of monomers constituting an acrylic base polymer in the presence of specific amounts of reactive surfactant and admixing specific amounts of a poly((meth) acrylic acid) to the thus obtained acrylic polymer substantially improves the high-temperature stability of the resulting PSA composition without compromising the humidity resistance thereof. Thus, the present invention has been completed.

Generally speaking, in one aspect the present invention provides a pressure-sensitive adhesive composition comprising: an acrylic polymer, and a poly((meth) acrylic acid); wherein a content of poly((meth)acrylic acid) is between 2.5 parts by weight to 10 parts by weight relative to 100 parts by weight of solid matter of the acrylic polymer; and wherein the acrylic polymer has been prepared by emulsion polymerization in the presence of a reactive surfactant in the amount of 1.25 parts by weight or more and less than 2.0 parts by weight relative to 100 parts by total weight of the monomers constituting the acrylic polymer.

In further aspects, the present invention relates to a pressure-sensitive adhesive sheet or tape comprising a pressure-sensitive adhesive layer formed from the aforementioned pressure-sensitive adhesive composition.

### BRIEF DESCRIPTION OF THE DRAWINGS

FIG. 1 is a schematic representation of an exemplary single-sided pressure-sensitive adhesive sheet.
FIG. 2 schematically depicts an exemplary double-sided pressure-sensitive adhesive sheet.

### DETAILED DESCRIPTION OF THE INVENTION

For a more complete understanding of the present invention, reference is now made to the following description of the illustrative embodiments thereof: For a more complete understanding of the present invention, reference is now made to the following description of the illustrative embodiments thereof:

### Pressure-Sensitive Adhesive Composition

In a first embodiment, the present invention relates to a pressure-sensitive adhesive composition comprising: an acrylic polymer, and a poly((meth)acrylic acid); wherein a content of poly((meth)acrylic acid) is between 2.5 parts by weight to 10 parts by weight relative to 100 parts by weight of solid matter of the acrylic polymer; and wherein the acrylic polymer has been prepared by emulsion polymerization in the presence of a reactive surfactant in the amount of 1.25 parts by weight or more and less than 2.0 parts by weight relative to 100 parts by total weight of the monomers constituting the acrylic polymer.

### [Acrylic Polymer]

The acrylic polymer is obtained by subjecting one or more acrylate-based monomers to an emulsion-based polymerization using water as dispersion medium. Emulsion polymerization may be carried out without the use of solvents, which is not only advantageous from an environmental perspective, but also in that the rate of polymerization in the mixture is higher. Furthermore, in solution polymerization, it is difficult to completely remove the solvent from the final product. Additional advantages of emulsion polymerization are to be found in a low viscosity of the reaction mixture, simplified thermal control of the process and high conversion rates. Moreover, the products obtained in latex form are directly usable.

The acrylic polymer serves as a base polymer for the pressure-sensitive adhesive composition. (Co-)monomers constituting the acrylic polymer are not particularly limited and may be suitably selected by the skilled artisan depending on the desired properties.

For the preparation of an adhesive composition with favorably high adhesion on different types of substrates, one or more acrylate monomers subjected to emulsion polymerization in the presence of the reactive surfactant preferably comprise: a) an alkyl (meth)acrylate having an alkyl group with 2 to 14 carbon atoms; b) at least one α,β-ethylenically unsaturated, carboxyl group-containing monomer other than component a), which is preferably selected from at least methyl methacrylate, acrylic acid, methacrylic acid, and combinations thereof; and c) an alkoxysilyl group-containing monomer preferably selected from an alkoxysilyl group-containing acrylate monomer or an alkoxysilyl-group containing vinyl monomer.

Monomer component a) is an alkyl (meth)acrylate having an alkyl group with 2 to 14 carbon atoms, preferably with 2 to 12 carbon atoms and more preferably with 4 to 10 carbon atoms. Without being limited thereto, examples thereof include n-butyl (meth)acrylate, isobutyl (meth)acrylate, n-hexyl (meth)acrylate, 2-ethylhexyl (meth)acrylate, and 2-ethylhexyl (meth)acrylate, cyclohexyl (meth)acrylate, n-octyl (meth)acrylate, isooctyl (meth)acrylate, nonyl (meth)acrylate, isononyl (meth)acrylate, undecyl (meth)acrylate, isodecyl (meth)acrylate, undecyl (meth)acrylate, and the like. Further preferred examples include n-butyl (meth)acrylate and 2-ethylhexyl (meth)acrylate, of which 2-ethylhexyl (meth)acrylate is particularly preferred.

Unless otherwise indicated, it will be understood that any term containing parentheses refers, alternatively, to the whole term as if no parentheses were present and the term without that contained in the parentheses, and combinations of each alternative. Thus, the term "(meth)acrylate" means acrylate, methacrylate, or mixtures thereof, and, similarly, the term "(meth)acrylic" generally refers to any of acrylic, methacrylic, and mixtures thereof.

The amount of monomer component a) is not particularly limited. However, to ensure a soft polymer matrix and to improve contact efficiency, component a) is preferably used as main monomer at a content of more than 50 parts by weight, more preferably between 55 to 98 parts by weight, such as 60 to 97 parts by weight with respect to 100 parts by weight of all acrylate monomers constituting the acrylic emulsion-based polymer. In embodiments, component a) may be present in an amount of from 60 to 92 parts by weight of the total amount of monomer components.

Monomer component b) is at least one α,β-ethylenically unsaturated, carboxyl group-containing monomer other than that selected for component a). While not being limited thereto, α,β-ethylenically unsaturated carboxylic acids (acrylic acid, methacrylic acid, beta-acryloxypropionic acid, ethacrylic acid, α-chioroacryhc acid, α-vinyiacrylic acid, crotonic acid, α-phenylacrylic acid, cinnamic acid, chlorocinnamic acid, β-styrylacrylic acid, maleic acid, itaconic acid, and citraconic acid) and their acid esters may be mentioned as examples. Preferably, component b) comprises - alternatively or in addition - at least one alkyl (meth)acrylate having an alkyl group with less than 4 carbon atoms, more preferably from 1 to 3 carbon atoms. As examples of the latter, methyl (meth)acrylate, ethyl (meth)acrylate, n-propyl (meth)acrylate, and isopropyl (meth)acrylate may be mentioned. Methyl (meth)acrylate is particularly preferred as it improves stress dissipation during debonding due to the presence of methyl group in the polymer backbone.

Although the (total) amount of monomer component b) is not particularly limited, a (total) amount of 2 to 40 parts by weight with respect to 100 parts by weight of the total amount of monomer components is typically employed. For a favourable hardness of the polymer matrix, especially preferred (total) amounts range from 2 to 20 parts by weight, such as from 3 to 15 parts by weight or from 4 to 10 parts by weight.

From the viewpoint of improved stress dissipation during debonding, it is preferred that component b) comprises: b1) an alkyl (meth)acrylate having an alkyl group with from 1 to 3 carbon atoms, and b2) at least one α,β-ethylenically unsaturated carboxylic acid selected from acrylic acid and methacrylic acid, preferably both. In this case, it is preferred that the weight ratio of components b1) and b2) is from 1:1 to 10:1, more preferably from 2:1 to 5:1.

Component c) is an alkoxysilyl group-containing monomer, a functional monomer which enables crosslinking by hydrolysis and condensation in presence of atmospheric moisture. Component c) is preferably selected from an alkoxysilyl group-containing acrylate monomer or an alkoxysilyl-group containing vinyl monomer, among which alkoxysilyl group-containing acrylate monomers are especially preferred. Examples of the alkoxysilyl-group containing vinyl monomer include vinyltrialkoxysilanes, vinylalkyldialkoxysilanes, and the like. As specific examples of alkoxysilyl group-containing acrylate monomers, (meth)acyloyloxyalkyl-trialkoxysilanes (e.g. (meth)acryloyloxymethyl-trimethoxysilane, (meth)acryloyloxymethyl-triethoxysilane, 2-(meth)acryloyloxyethyl-trimethoxysilane, 2-(meth)acryloyloxyethyl-triethoxysilane, 3-(meth)acryloyloxypropyl-trimethoxysilane (MAPTMS), 3-(meth)acryloyloxypropyl-triethoxysilane, 3-(meth)acryloyloxypropyl-tripropoxysilane, 3-(meth)acryloyloxypropyl-triisopropoxysilane), (meth) acryloyloxyalkyl-alkyldialkoxysilanes (e.g. such as (meth)acryloyloxymethyl-methyldimethoxysilane) and (meth)acryloyloxyalkyl-dialkyl(mono)alkoxysilanes or the like may be mentioned.

The amount of component c) is not particularly limited, and may be between 0.001 to 1 parts by weight with respect to 100 parts by weight of all acrylate monomers constituting the acrylic emulsion-based polymer, for example, such as from 0.005 to 0.7 parts by weight.

In preferred embodiments, a chain transfer agent is added in an amount of 0.001 to 0.3 parts by weight with respect to 100 parts by weight of all acrylate monomers constituting the acrylic emulsion-based polymer, preferably between 0.01 to 0.1 parts by weight, further preferably between 0.02 to 0.1 parts by weight.

The aforementioned ranges are preferred when targeting a suitable weight-average molecular weight for an improved balance of adhesion properties, debonding performance and mechanical resistance. In this respect, it may be preferable that the acrylic emulsion-based polymer has a weight-average molecular weight (M_{w}) in the range of more than 100 kDa and 1500 kDa or less, preferably more than 200 kDa and 1000 kDa or less (as measured by gel permeation chromatography (GPC)). In preferred embodiments, the acrylic polymer has a number-average molecular weight (Mₙ) of less than 800 kDa, more preferably in the range of 50 to 500 kDa, further preferably from 60 to 300 kDa, or especially preferably from 100 to 200 kDa, as measured by gel permeation chromatography (GPC)/size exclusion chromatography (SEC).

The polydispersity index (PDI) of the acrylic polymer, defined as the ratio of the weight-average molecular weight (M_{w}) to the number-average molecular weight (Mₙ), is preferably between 1.5 and 4.5, especially preferably between 2.0 and 4.0.

The chain transfer agent is not particularly limited and typically selected from one or more thiol compounds including monofunctional and polyfunctional thiols. Monofunctional thiols include, but are not limited to, propyl mercaptan, butyl mercaptan, hexyl mercaptan, octyl mercaptan, n-dodecyl mercaptan, thioglycollic acid, mercaptopropionic acid, alkyl thioglycollates, mercaptoethanol, mercaptoundecanoic acid, thiolactic acid, and thiobutyric acid, among which n-dodecyl mercaptan is preferred. Examples of polyfunctional thiols include trifunctional compounds such as trimethylol propane tris(3-mercaptopropionate), tetrafunctional compounds such as pentaerythritol tetra(3-mercaptopropionate), pentaerythritol tetrathioglycollate, pentaerythritol tetrathiolactate, pentaerythritol tetrathiobutyrate; hexafunctional compounds such as dipentaerythritol hexa(3-mercaptopropionate), dipentaerythritol hexathioglycollate; and octafunctional thiols such as tripentaerythritol octa (3-mercaptopropionate) or tripentaerythritol octathioglycollate.

### [Surfactants]

According to the present invention, the acrylic polymer described above is obtained by subjecting one or more acrylate-based monomers to an emulsion-based polymerization using water as dispersion medium in the presence of a reactive surfactant

The term "reactive surfactant", as used herein, generally denotes an ionic and/or non-ionic surfactant which is not only capable of being adsorbed onto the surface of the polymer particles but covalently binds to the acrylic polymer chain via a reactive moiety, typically through a free radical mechanism. Once covalently bound to the surface of the latex (i.e. dispersed polymer particle), the surfactant molecules are no longer reactive and firmly bound to the polymer. However, it is preferred that the ionic and/or non-ionic reactive surfactants used in the present invention are not incorporated into the polymer chain as co-monomers and hence do not act as what is known as "surfmers", although the emulsion polymerization process is conducted in their presence. Accordingly, the surfactants do not substantially compromise the adhesion performance of the acrylic polymer and stabilize the polymer emulsion while not being susceptible to migration through the adhesive bulk to the interface between the adhesive and the substrate, and thus efficiently ensure excellent peel retention under high humidity conditions.

From the viewpoint of improved thermal stability, the acrylic polymer is prepared by emulsion polymerization in the presence of a reactive surfactant in the amount of between 1.25 parts by weight to 1.99 parts by weight relative to 100 parts by total weight of the monomers constituting the acrylic polymer, such as between 1.25 parts by weight to 1.98 parts by weight or between 1.25 parts by weight to 1.97 parts by weight, more preferably between 1.25 parts by weight to 1.93 parts by weight, such as between 1.25 parts by weight to 1.90 parts by weight, even more preferably between 1.25 parts by weight to 1.80 parts by weight, and especially preferably between 1.25 parts by weight to 1.77 parts by weight relative to 100 parts by total weight of the monomers constituting the acrylic polymer.

Notably, the given amount of reactive surfactant denotes the total amount of non-ionic and ionic (e.g. anionic) reactive surfactants. However, it has been found that the thermal stability of pressure-sensitive adhesive compositions may be further enhanced by limiting the content of non-ionic reactive surfactant. From this perspective, when a non-ionic reactive surfactant is present, it is preferred that the reactive surfactant comprises 30 wt.-% or less of a non-ionic reactive surfactant relative to the total weight of the reactive surfactant, more preferably 10 wt.-% or less, and further preferably 5 wt.-% or less, such as 1 wt.-% or less, 0.5 wt.-% or less, 0.05 wt.-% or less or 0.01 wt.-% or less. In an especially preferred embodiment, the reactive surfactant does not comprise a non-ionic reactive surfactant at all.

In other preferred embodiments, the reactive surfactant comprises at least 50 wt.-% of an ionic reactive surfactant relative to the total weight of the reactive surfactant, more preferably at least 60 wt.-%, and especially preferably at least 70 wt.-%, such as 90 wt.-% or more, 95 wt.-% or more, 99 wt.-% or more, or 99.5 wt.-% or more.

Under aspects of especially improved high temperature stability, it may be preferred that the reactive surfactant consists of an ionic reactive surfactant, e.g. an anionic reactive surfactant.

The reactive moieties of the ionic and/or non-ionic reactive surfactants used in emulsion polymerization preferably represent ethylenically unsaturated bonds, which are further preferably independently selected from maleic double bonds or terminal olefins, wherein among the latter, an allyl and/or a methallyl group is particularly preferred. Each surfactant may comprise a plurality of such groups. While not being limited thereto, suitable reactive surfactants comprising terminal olefins are disclosed in US 2014/114006 A1, US 2013/047892 A1 and JP 2596441 B2, for example.

Typically, each of the ionic reactive surfactant and the non-ionic reactive surfactant is an amphiphilic molecule comprising a hydrophobic moiety, a hydrophilic moiety and the reactive moiety.

Examples of the hydrophobic moiety include, but are not limited to a hydrocarbon group, a fluorocarbon group, a siloxane group, or combinations thereof.

The hydrophilic moiety preferably comprises a poly(alkylene oxide) group, a poly(alkylalkylene oxide) group, a poly(arylalkylene oxide) group, or combinations thereof. Poly(alkylene oxide) groups and especially poly(ethylene oxide) groups are particularly preferred.

In preferred embodiments, the ionic reactive surfactant is an anionic reactive surfactant, further preferably an anionic reactive surfactant comprising an anionic group selected from a sulfate group, a sulfonate group, a phosphate ester group and a carboxylate group.

An example of an anionic reactive surfactant with a maleic group is shown in the below General Formula (1):

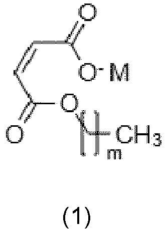

In General Formula (1), m is an integer of from 3 to 100 and M represents a cationic group and is preferably an alkali metal cation or an ammonium cation.

Further preferred examples of anionic reactive surfactants are shown in the below General Formulae (2-1) and (2-2):

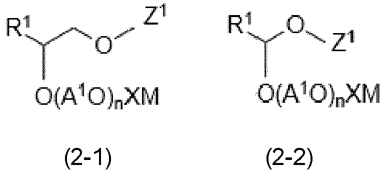

In General Formulae (2-1) and (2-2), R¹ represents a C₆-C₃₀ alkyl group or a C₆-C₆₀ aryl group; n is an integer of from 1 to 200; A¹ is an C₁-C₅ alkylene group, a C₂-C₈ alkylalkylene group or an C₇-C₁₂ arylalkylene group; and X is an anionic group, preferably a sulfate group, a sulfonate group, a phosphate ester group or a carboxylate group, more preferably a sulfonate group. M represents a cationic group and is preferably an alkali metal cation or an ammonium cation.

Other preferred examples of anionic reactive surfactants include polyoxyalkylene alkylphenyl ethers with an ethylenically unsaturated bond. Examples thereof include, but are not limited to compounds according to General Formula (3):

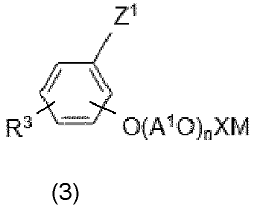

In General Formula (3), R³ represents a C₆-C₅₀ alkyl group or a C₆-C₆₀ aryl group; n is an integer of from 1 to 200; A¹ is an C₁-C₅ alkylene group, a C₂-C₈ alkylalkylene group or an C₇-C₁₂ arylalkylene group; and X is an anionic group, preferably a sulfate group, a sulfonate group, a phosphate ester group or a carboxylate group, more preferably a sulfonate group. M represents a cationic group and is preferably an alkali metal cation or an ammonium cation.

In the above formulae, Z¹ is selected from any of the below residues (3-1) to (3-7), wherein R² as well as R²⁻¹ and R²⁻² (independently) represent a C₁-C₃ alkyl group, preferably a methyl group:

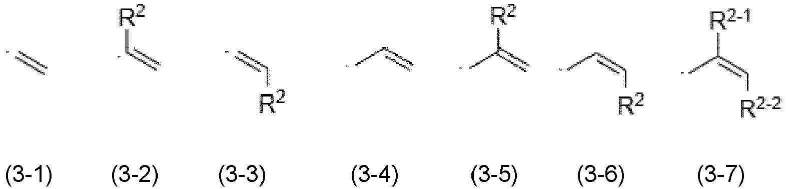

If present, a non-ionic reactive surfactant may be preferably represented by any of the below General Formulae (4-1) or (4-2):

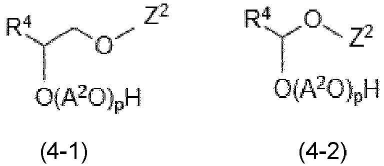

In General Formulae (4-1) and (4-2), R⁴ represents a C₆-C₃₀ alkyl group or a C₆-C₆₀ aryl group; p is an integer of from 1 to 200; and A² is a C₁-C₅ alkylene group, a C₂-C₈ alkylalkylene group or a C₇-C₁₂ arylalkylene group.

An alternatively preferred example of a non-ionic surfactant is shown in General Formula (5):

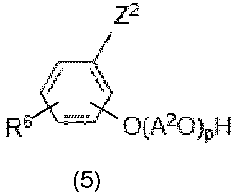

Herein, R⁶ represents a C₆-C₅₀ alkyl group or a C₆-C₆₀ aryl group; p is an integer of from 1 to 200; and A² is an C₁-C₅ alkylene group, a C₂-C₈ alkylalkylene group or an C₇-C₁₂ arylalkylene group.

In the aforementioned general formulae, Z² is selected from any of the below residues (6-1) to (6-7), wherein R⁵ as well as R⁵⁻¹ and R⁵⁻² (independently) represent a C₁-C₃ alkyl group, preferably a methyl group:

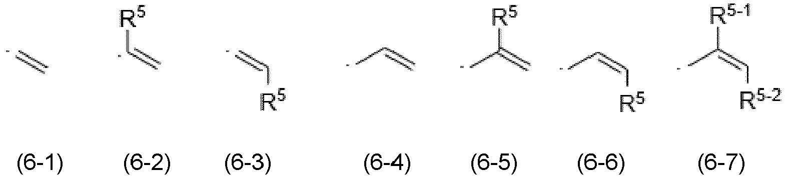

### [Polymerization Additives]

Depending on the polymerization conditions, polymerization additives (such as polymerization initiators, stabilizers and/or rheology modifiers) may be suitably added to the composition.

Examples of the polymerization initiator include, but are not limited to an azo initiator (such as 2,2'-azobis[N-(2-carboxyethyl)-2-methylpropionamidine]hydrate, 2,2'-azobisisobutyronitrile, 2,2'-azobis(2-methylpropionamidine) disulfate, 2,2'-azobis(2-amidinopropane) dihydrochloride, 2,2'-azobis[2-(5-methyl-2-imidazolin-2-yl) propane] dihydrochloride, 2,2'-azobis(N, N'-dimethyleneisobutylamidine) dihydrochloride, and the like); a peroxide initiator (e.g., persulfates such as potassium persulfate and ammonium persulfate; benzoyl peroxide, t-butyl hydroperoxide, di-t-butyl peroxide, t-butyl peroxybenzoate, hydrogen peroxide, and the like); and a redox initiator in which a peroxide and a reducing agent are combined (e.g., a combination of peroxide and ascorbic acid, a combination of peroxide and an iron (II) salt, a combination of persulfate and sodium bisulfite, and the like).

The amount of a polymerization initiator can be suitably selected by the skilled artisan depending on the type of initiator and the monomer composition, and will be usually about 0.01 to 1 parts by weight with respect to 100 parts by weight of the total amount of monomer components, for example.

After emulsion polymerization, an acid or a base may be added to adjust the pH of the polymer. Bases, such as ammonia, are preferred stabilizers since they deprotonate the carboxylic functions of component b) and stabilize the resulting particles against coalescence.

In some instances, emulsion-based polymers may require the addition of a rheology modifier (after polymerization) to increase the viscosity of the adhesive. Examples of such rheology modifiers include, but are not limited to alkali swellable emulsions (ASE) and hydrophobically modified variants thereof. In preferred embodiments, rheology modifiers are mixed with the emulsion-based acrylic polymer at a weight ratio of 1:50 to 1:200, preferably at a weight ratio of 1:70 to 1:150.

If particularly enhanced adhesion to foamed substrates is desired, the acrylic emulsion-based polymer preferably exhibits a glass transition temperature T_{g} of lower than -20°C, more preferably between -80°C to -30°C, further preferably between -75 to -40°C, especially preferably from -70°C to -48°C, which may be suitably measured by differential scanning calorimetry (DSC).

### [Poly((meth)acrylic acid)]

In the pressure-sensitive adhesive composition according to the present invention, poly((meth)acrylic acid) is admixed to the water-dispersed acrylic polymer in an amount of from 2.5 parts by weight to 10 parts by weight relative to 100 parts by weight of solid matter of the acrylic polymer.

The term "poly((meth)acrylic acid)", as used herein, denotes a copolymer (e.g., an acrylic acid/methacrylic acid copolymer), a homopolymer (i.e. poly(acrylic acid) homopolymer or poly(methacrylic acid) homopolymer) or combinations thereof. In a preferred embodiment, however, poly(acrylic acid) homopolymer is used as poly((meth)acrylic acid).

From the viewpoint of further improved thermal stability, the lower limit of the content of the poly((meth)acrylic acid) in the pressure-sensitive adhesive composition is preferably 2.8 parts by weight and especially preferably 3.0 parts by weight relative to 100 parts by weight of the acrylic polymer. To ensure a favourable coatability of the adhesive composition, an upper limit of the content of the poly((meth)acrylic acid) 9.0 parts by weight relative to 100 parts by weight of the acrylic polymer may be preferred.

The weight-average molecular weight of the poly((meth)acrylic acid) is not particularly limited and may be suitably selected by the skilled artisan in the range of, for example, about from 0.5 to 5,000 kDa or from 1 to 1,000 kDa.

### [PSA Additives]

Optional additives that can be contained in the acrylic PSA composition include viscosity modifiers (thickeners, etc.), leveling agents, release modifiers, tackifiers, plasticizers, softeners, fillers, colorants (pigments, dyes, etc.), antistatic agents, preservatives, anti-aging agents, ultraviolet absorbers, antioxidants and light stabilizers, for example.

In preferred embodiments, the acrylic pressure-sensitive adhesive composition according to the present invention preferably contains a tackifier in an amount of 25 wt.-% or less, such as 10 wt.-% or less, 5 wt.-% or less, more preferably less than 5 wt.-%, such as 4 wt.-% or less, 3 wt.-% or less, 1 wt.-% or less, 0.5 wt.-% or less, or even 0.01 wt.-% or less based on the total weight of the acrylic polymer. The aforementioned contents are especially advantageous from the perspective of reduced manufacturing costs, improved thermal stability and/or sustainability. Furthermore, low tackifier contents enable production of PSA tapes with particularly low emission (i.e. low VOC and low fogging) performance. Most preferably, the acrylic pressure-sensitive adhesive composition does not contain a tackifier at all. Examples of such tackifiers include rosin-based tackifier resins (e.g., gum rosin, wood rosin, tall oil rosin, stabilized rosin obtained by disproportionating or hydrogenating the rosin), and polymerized rosin), rosin derivative tackifier resins (e.g., esters of rosin-based resins, phenol-modified products of rosin-based resins), petroleum-based tackifier resins (e.g. aliphatic petroleum resins, aromatic petroleum resins, copolymer petroleum resins, alicyclic petroleum resins, and hydrides thereof), terpene-based tackifier resins (e.g., α-pinene resin, β-pinene resin, aromatic-modified terpene resin, and terpene phenol resin), phenol-based tackifier resins, ketone-based tackifier resins (e.g., ketone-based resins obtained by condensing ketones (for example, aliphatic ketones such as methyl ethyl ketone, methyl isobutyl ketone, and acetophenone; alicyclic ketones such as cyclohexanone and methylcyclohexanone) and formaldehyde), and the like. It is also preferred that the content of plasticizer in the PSA composition is less than 5 wt.-% based on the total weight of the pressure-sensitive adhesive, more preferably less than 3 wt.-%, such as 1 wt.-% or less, 0.5 wt.-% or less, or 0.05 wt.-% or less. Especially preferably, the use of plasticizer in the acrylic PSA composition is entirely omitted. Plasticizers, as defined herein, may include hydrocarbon oil components (such as aliphatic/paraffinic components, aromatic components and naphthenic components, as well as mixtures thereof), adipic ester plasticizers, as well as plasticizers selected among propylene oligomers, butene oligomers, isoprene oligomers, hydrogenated isoprene oligomers, butadiene oligomers, benzoic esters and vegetable and animal oils and derivatives thereof, for example.

### [PSA Properties]

Under aspects of improved stress dissipation and limitation of creep, the acrylic pressure-sensitive adhesive composition preferably exhibits a gel content in the range of from 15 to 45%, further preferably from 20 to 40%. The gel content may be suitably determined by methods known to the skilled artisan.

### Pressure-Sensitive Adhesive Sheets and Tapes

In a second embodiment, the invention relates to a pressure-sensitive adhesive (PSA) sheet (e.g., in the form of a tape) comprising a pressure-sensitive adhesive layer formed from the pressure-sensitive adhesive composition according to the first embodiment described above.

Notably, the PSA sheet or tape may be a carrierless sheet or tape (also referred to as baseless tape or sheet or transfer tape or sheet), which may be optionally provided with a release liner.

Preferably, the pressure-sensitive adhesive (PSA) sheet comprises an adhesive layer on at least one surface of a carrier layer and an optional release liner provided on the adhesive layer, wherein the adhesive layer comprises the acrylic pressure-sensitive adhesive composition according to the first embodiment described above.

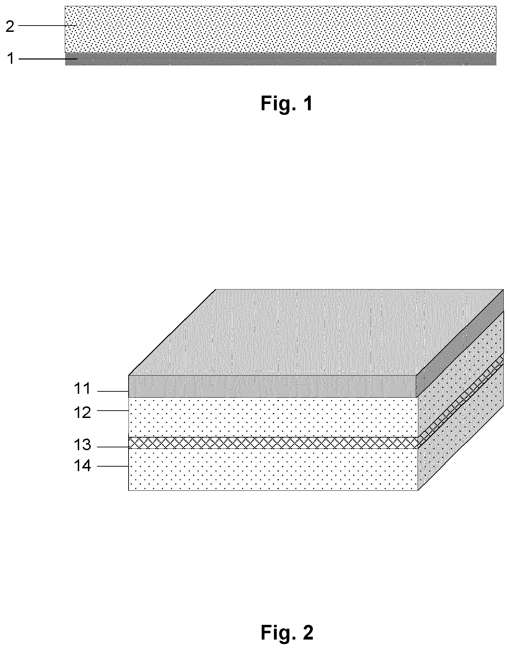

Accordingly, the PSA sheet may be a single-sided adhesive sheet, wherein the pressure-sensitive adhesive composition according to the first embodiment may be provided on only one or on both sides of a carrier layer, as is illustrated in Fig. 1, or a double-sided adhesive sheet, wherein the pressure-sensitive adhesive composition according to the first embodiment is provided on both sides of a carrier layer.

The carrier layer is not particularly limited and may be a paper or preferably a film composed of materials known in the art, such as polyethylene (PE), polypropylene (PP), polyether sulfones, polyamides, polyimides, polyetherimides, polyesters, polyphenyl sulfides, polyamideimides, polyetherimides, polymethacrylates, styrene-based films, polycarbonates, polyether ketones, polyaryls, polyurethanes, polyacrylates, polybutyrals, polyethylene-vinyl acetates, polyethylene naphthylates, fluorinated polymers and combinations thereof. The carrier layer may also incorporate nonwovens or fabrics. Foam carriers may also be mentioned as exemplary carrier layers. Examples of the latter include, but are not limited are in particular foams based on homopolymers and copolymers of ethylene (e.g. PE), ethylene-vinyl acetate copolymers (EVA), polyvinyl acetates, polypropylenes, ethylene-propylene-diene rubber (EPDM), thermoplastic elastomers based on styrene block copolymers, polyurethanes based on aromatic and aliphatic diisocyanates, polyvinyl chloride (PVC), polychloroprenes, natural rubber, acrylate copolymers, and combinations thereof.

Exemplary PSA sheets may also include multilayer PSA tapes, wherein the acrylic pressure-sensitive adhesive composition according to the first embodiment is provided between two carrier layers, wherein one of the carrier layers may be a foam carrier layer.

In a preferred embodiment, the PSA tape is a double-sided PSA tape with the adhesive layer comprising the PSA composition according to the first embodiment on at least one surface of the carrier layer, preferably on both surfaces of the carrier layer. An example thereof is illustrated in Fig. 2, wherein a first adhesive layer (12) is provided on one surface of a carrier layer (13) and a second adhesive layer (14) on the other surface of the carrier layer (13), with the optional release liner (11) being provided in contact with one of the adhesive layers.

Conventional release liners known in the art may be used (e.g. based on polymeric films, papers, woven materials and/or metal foils) on any outer PSA layer surface.

The thicknesses of each of the layers are not particularly limited and may be suitably adjusted by the skilled artisan depending on the choice of materials and the purpose of application.

It will be understood that the preferred features of the first and second embodiments may be freely combined in any combination, except for combinations where at least some of the features are mutually exclusive.

### EXAMPLES

### Preparation of Pressure-Sensitive Adhesive Compositions

Water-dispersed acrylic polymers A to F were prepared by emulsion polymerization of the compositions shown in Table 1.

**TABLE 1: Compositions for emulsion polymerization (water excluded).**

| | | **Polymer A** | **Polymer B** | **Polymer C** | **Polymer D** | **Polymer E** | **Polymer F** |
|---|---|---|---|---|---|---|---|
| | | (wt.-% at dry state) | | | | | |
| Monomers | 2-Ethylhexyl Acrylate | 90.2 | 90.2 | 89.7 | 90.2 | 88.5 | 83.5 |
| | Methyl Methacrylate | 6.20 | 6.20 | 6.20 | 6.20 | 6.23 | 0.00 |
| | Methyl Acrylate | 0.00 | 0.00 | 0.00 | 0.00 | 0.00 | 12.8 |
| | Acrylic Acid | 1.25 | 1.25 | 1.25 | 1.25 | 1.27 | 1.20 |
| | Methacrylic Acid | 0.75 | 0.75 | 0.75 | 0.75 | 0.78 | 0.74 |
| | MAPTMS | 0.023 | 0.023 | 0.023 | 0.023 | 0.023 | 0.020 |
| Chain Transfer Agent | N-Dodecylmercaptan | 0.030 | 0.050 | 0.030 | 0.030 | 0.052 | 0.025 |
| Ionic Reactive Surfactant | Hitenol^{®} KH-1025 | 1.50 | 1.50 | 200 | 1.275 | 1.250 | 1.96 |
| Non-Ionic Reactive Surfactant | Noigen^{®} KN-2020 | 0.00 | 0.00 | 0.00 | 0.225 | 1.870 | 0.00 |

Methacryloxypropyltrimethoxysilane (MAPTMS) (commercially obtained as KBM-503 from Shin-Etsu Chem.) was used as functional monomer enabling crosslinking by hydrolysis and condensation in presence of atmospheric moisture. N-dodecylmercaptan (n-DDM) was used as a chain transfer agent. VA-044, commercially obtained from Fujifilm Wako Chemicals, was used as an azo-based radical initiator.

The content of anionic reactive surfactant and non-ionic reactive surfactant relative to 100 parts by weight of all acrylate monomers constituting the acrylic emulsion-based polymer are shown in Table 1.

As the anionic reactive surfactant, Hitenol^{®} KH-1025, a polyoxyethylene-1-(allyloxymethyl) alkyl ether ammonium sulfate commercially available (in 25 wt.-% concentration) from Dai-ichi Kogyo Seiyaku (DKS) was used. As the non-ionic reactive surfactant, Noigen^{®} KN-2020, a polyoxyethylene nonyl propenyl phenyl ether-type surfactant commercially available from Dai-ichi Kogyo Seiyaku (DKS) was used.

The phases were homogenized for 15 min at 6000 rpm with an Ultra-Turrax T50 homogenizer.

The emulsion polymerization was conducted in a semi-batch process with no reacting monomer initially present in the reactor. The reactor was purged with nitrogen (N₂) for 1 h before the addition of the initiator. The initiator solution was added once the temperature reached the set temperature of 60°C. The monomer feed started 10 min after the initiator solution was added to the reactor, whereupon the reactor was maintained at 60°C during the polymerization under N₂ atmosphere. The monomer feed was continuously purged with N₂ and fed into the reactor for 5h until the feed was depleted. The temperature was then raised to 65°C for 5 h to age the polymer and reduce the amount of residual monomers.

Ammonia solution (25%) was added after ageing to stabilize polymer particles against coalescence. Pressure-sensitive adhesive compositions according to Comparative Examples 1 to 4 were prepared by admixing a rheology modifier (Rheovis AS1125, commercially obtained from BASF) to increase the final adhesive viscosity of the PSA composition. Alternatively, in Comparative Examples 5 and 6 and Examples 1 to 3, polyacrylic acid (Aron^{™} A-10H, commercially available from Toagosei Co., Ltd., Mn: 200,000, 25 wt. % aqueous solution) were added to the mixture in the amounts given in Table 2. In Examples 4 and 5, alternative polyacrylic acids (PA-5000 having a weight-average molecular weight M_{w} of approximately 5 kDa, and PA-25000, having an M_{w} of about 25 kDa, respectively, both being commercially available from Fujifilm Wako Chemicals) were added.

**TABLE 2: Pressure-sensitive adhesive compositions**

| | | **Comp. Example 1** | **Comp. Example 2** | **Comp. Example 3** | **Comp. Example 4** | **Comp. Example 5** | **Comp. Example 6** | **Comp. Example 7** | **Example 1** | **Example 2** | **Example 3** | **Example 4** | **Example 5** |
|---|---|---|---|---|---|---|---|---|---|---|---|---|---|
| | | (wt.-% at dry state) | | | | | | | | | | | |
| Polymer A | | 100 | - | - | - | - | - | - | - | - | - | - | - |
| Polymer B | | - | 100 | - | - | - | 100 | - | 100 | 100 | - | - | - |
| Polymer C | | - | - | 100 | - | - | - | - | - | - | - | - | - |
| Polymer D | | - | - | - | 100 | - | - | - | - | - | - | - | - |
| Polymer E | | - | - | - | - | 100 | - | - | - | - | - | - | - |
| Polymer F | | - | - | - | - | - | - | 100 | - | - | 100 | 100 | 100 |
| Rheology Modifier | | 0.6 | 0.6 | 0.6 | 0.6 | - | - | 0.6 | - | - | - | - | - |
| Polyacrylic Acid | Aron A-10H | - | - | - | - | 3.0 | 2.0 | - | 3.0 | 4.0 | 3.0 | - | - |
| | PAA-5000 | - | - | - | - | - | - | - | - | - | - | 3.0 | - |
| | PAA-25000 | - | - | - | - | - | - | - | - | - | - | - | 3.0 |
| Ammonia (25%) | | 0.05 | 0.05 | 0.05 | 0.05 | 0.195 | 0.13 | 0.195 | 0.195 | 0.30 | 0.195 | 0.195 | 0.195 |

### PSA Tape Preparation

For the stress-strain test, the adhesive formulations of Examples 1 to 5 and Comparative Examples 1 to 7 were each coated on a siliconized paper liner (thickness of 125 µm (122 g/m²)) and dried in an oven for 3 min at 130°C, resulting in carrier-free adhesive tapes with an adhesive layer thickness of 65 µm each (65 g/m²). Samples were prepared by rolling the adhesive to obtain a cylinder of approximatively 3 mm of section and 40 mm in length. The edge of each cylinder was pressed between two paper pieces of 2 mm thickness. The distance between each paper sheet was 25 mm.

### Mechanical Analysis

The initial maximum stress and the maximum stress after aging the samples at 90°C for 7 days were determined via stress-strain tensometry to evaluate the thermal stability of the PSA compositions.

Stress-strain tensometry was performed using a Zwick Z005 tensile machine. The samples were mounted between the clamps of the apparatus. The initial distance between both clamps was set between 25 mm and the mobile upper clamp was moved upward at a tensile speed of 300 mm/min. All tests were done in triplicate and the average of the measurements was used for the evaluation.

### Results and Discussion

The performance results of the adhesive compositions and double-sided tapes in accordance to Examples 1 to 5 and Comparative Examples 1 to 7 are shown in Table 3 below:

**TABLE 3: Results of stress-strain tensometry before and after thermal aging.**

| | **Comp. Example 1** | **Comp. Example 2** | **Comp. Example 3** | **Comp. Example 4** | **Comp. Example 5** | **Comp. Example 6** | **Comp. Example 7** | **Example 1** | **Example 2** | **Example 3** | **Example 4** | **Example 5** |
|---|---|---|---|---|---|---|---|---|---|---|---|---|
| Max. stress (initial, in mN/mm²) | 307 | 141 | 239 | 292 | 90 | 164 | 205 | 164 | 219 | 225 | 218 | 198 |
| Max. stress (after aging at 90°C for 1 week, in mN/mm²) | 540 | 399 | 466 | 573 | 311 | 306 | 530 | 269 | 343 | 370 | 322 | 248 |
| Rate of increase (%) | 76 | 183 | 95 | 96 | 246 | 87 | 159 | 64 | 57 | 64 | 48 | 25 |

A large increase of the maximum stress upon aging (in %) relative to the initial maximum stress indicates an undesirable change of the elasticity of the pressure-sensitive adhesive and a poor thermal stability. On the other hand, a low rate of maximum stress increase indicates a favourable thermal stability. A rate of increase of 70° or less is considered favourable.

Comparative Examples 1, 2 and 4 were each prepared by using a reactive surfactant in the amount of 1.5 parts by weight relative to 100 parts by total weight of the monomers constituting the acrylic polymer. However, due to the absence of polyacrylic acid, a higher rate of maximum stress increase is observed than in Example 1. The comparison between Examples 1 and 2 and Comparative Examples 2 and 6 demonstrates an inferior thermal stability of samples, wherein polyacrylic acid has not been added or added in a lower amount than required by the present invention, even in the presence of the same polymer composition (i.e. Polymer B). The same conclusions are drawn with respect to the comparison between Comparative Example 7 and Examples 3 to 5.

On the other hand, in Comparative Example 5, wherein the content of the polyacrylic acid is in the range of 3 parts by weight relative to 100 parts by weight of the acrylic polymer, but the content of total amount of reactive surfactant exceeds the range according to the present invention, an inferior thermal stability is observed.

In conclusion, the above results demonstrate that the present invention provides an adhesive composition with improved stability under high-temperature aging conditions.

Once given the above disclosure, many other features, modifications, and improvements will become apparent to the skilled artisan.

### Reference Numerals

- 1:: release liner
- 2:: adhesive layer
- 3:: substrate
- 11:: release liner
- 12:: first adhesive layer
- 13:: carrier layer
- 14:: second adhesive layer

## Claims

1. A pressure-sensitive adhesive composition comprising:
an acrylic polymer, and
a poly((meth)acrylic acid);
wherein a content of poly((meth)acrylic acid) is between 2.5 parts by weight to 10 parts by weight relative to 100 parts by weight of solid matter of the acrylic polymer, and
wherein the acrylic polymer has been prepared by emulsion polymerization in the presence of a reactive surfactant in the amount of 1.25 parts by weight or more and less than 2.0 parts by weight relative to 100 parts by total weight of the monomers constituting the acrylic polymer.

2. The pressure-sensitive adhesive composition according to claim 1, wherein the acrylic polymer has been prepared by emulsion polymerization in the presence of a reactive surfactant in the amount of between 1.25 parts by weight to 1.99 parts by weight relative to 100 parts, preferably between 1.25 parts by weight to 1.98 parts by weight, and especially preferably between 1.25 parts by weight to 1.97 parts by weight relative to 100 parts by total weight of the monomers constituting the acrylic polymer.

3. The pressure-sensitive adhesive composition according to claim 1 or 2, wherein the reactive surfactant comprises at least 50 wt.-% of an ionic reactive surfactant relative to the total weight of the reactive surfactant, preferably at least 60 wt.-%, more preferably at least 70 wt.-%.

4. The pressure-sensitive adhesive composition according to any of claims 1 to 3, wherein the reactive surfactant consists of an ionic reactive surfactant.

5. The pressure-sensitive adhesive composition according to claim 3 or claim 4, wherein the ionic reactive surfactant is an anionic reactive surfactant.

6. The pressure-sensitive adhesive composition according to any one of claims 1 to 3, wherein the reactive surfactant comprises 5 wt.-% or less of a non-ionic reactive surfactant relative to the total weight of the reactive surfactant, preferably 3 wt.-% or less, and more preferably 1 wt.-% or less.

7. The pressure-sensitive adhesive composition according to any one of claims 1 to 6, wherein the monomers constituting the acrylic polymer comprise:
a) an alkyl (meth)acrylate having an alkyl group with 2 to 14 carbon atoms;
b) at least one α,β-ethylenically unsaturated, carboxyl group-containing monomer other than component a), which is preferably selected from at least methyl methacrylate, acrylic acid, methacrylic acid, and combinations thereof; and
c) an alkoxysilyl group-containing monomer preferably selected from an alkoxysilyl group-containing acrylate monomer or an alkoxysilyl-group containing vinyl monomer.

8. The pressure-sensitive adhesive composition according to claim 7, wherein the amount of component a) is between 60 to 97 parts by weight, the (total) amount of component(s) b) is between 2 to 40 parts by weight, and the amount of component c) is between 0.001 to 1 parts by weight, each amount being given with respect to 100 parts by weight of solid matter of the acrylic polymer.

9. The pressure-sensitive adhesive composition according to any one of claims 1 to 8, wherein the acrylic polymer has been prepared in the presence of a chain transfer agent in an amount of 0.001 to 0.3 parts by weight, preferably between 0.02 to 0.1 parts by weight, relative to 100 parts by total weight of the monomers constituting the acrylic polymer.

10. The pressure-sensitive adhesive composition according to any one of claims 1 to 9, wherein a content of poly((meth)acrylic acid) is in the range of 3.0 parts by weight to 10 parts by weight relative to 100 parts by weight of the solid matter of the acrylic polymer.

11. The pressure-sensitive adhesive composition according to any one of claims 1 to 10, wherein the poly((meth)acrylic acid) includes or consists of polyacrylic acid.

12. A pressure-sensitive adhesive sheet or tape comprising a pressure-sensitive adhesive layer formed from the pressure-sensitive adhesive composition according to any one of claims 1 to 11.

13. The pressure-sensitive adhesive sheet or tape according to claim 12, configured as a double-sided pressure-sensitive adhesive sheet comprising a substrate, a first adhesive layer on one side of the substrate, and a second adhesive layer on the other side of the substrate,
wherein the pressure-sensitive adhesive composition according to any one of claims 1 to 11 is comprised in at least one of the first adhesive layer and the second adhesive layer.

14. The pressure-sensitive adhesive sheet or tape according to claim 13, wherein the pressure-sensitive adhesive composition according to any one of claims 1 to 11 is comprised in both the first adhesive layer and the second adhesive layer.
